(19) Europäisches Patentamt
European Patent Office
Office européen des brevets

(11) **EP 1 914 979 B1**

(12) **EUROPEAN PATENT SPECIFICATION**

(45) Date of publication and mention
of the grant of the patent:
**12.03.2014 Bulletin 2014/11**

(51) Int Cl.:
***H04N 1/387*** *(2006.01)*

(21) Application number: **07113707.9**

(22) Date of filing: **02.08.2007**

(54) **Image compensation in regions of low image contrast**

Bildkompensation in Bereichen mit geringem Bildkontrast

Compensation d'images dans des zones à faible contraste d'image

(84) Designated Contracting States:
**DE FR GB NL**

(30) Priority: **17.10.2006 KR 20060100738**
**09.07.2007 KR 20070068575**

(43) Date of publication of application:
**23.04.2008 Bulletin 2008/17**

(73) Proprietor: **Samsung Electronics Co., Ltd.**
**Suwon-si, Gyeonggi-do, 443-742 (KR)**

(72) Inventor: **Ohk, Hyung-soo**
**Seoul (KR)**

(74) Representative: **Davies, Robert Ean**
**Appleyard Lees**
**15 Clare Road**
**Halifax**
**Yorkshire HX1 2HY (GB)**

(56) References cited:
**EP-A2- 1 221 810     US-A1- 2005 280 849**
**US-B1- 6 175 660**

**Description**

The invention described herein is directed to image compensation and, more particularly, but not exclusively image forming with compensation of a distorted image.

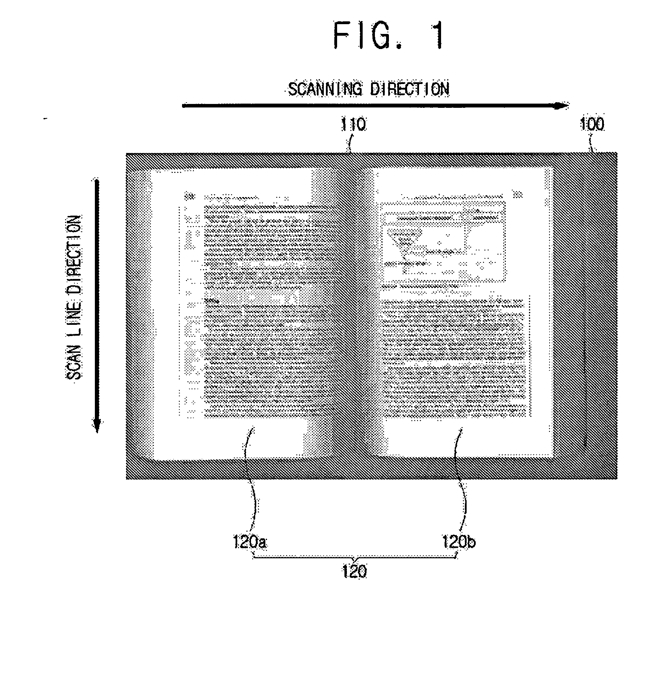

Generally, an image forming apparatus, such as a multi function apparatus, a duplicator, a scanner, etc., includes a scanning part to scan an object to be copied and to generate image data of the scanned object. If the object to be copied is a book, opposite pages are opened and placed face-down on a scan plane to be copied. Since a central part of the book between the opposing pages is removed from the scan plane by a height determined by the binding area of the book, the amount of light reaching the central part is smaller than the amount of light reaching the part of the pages in contact with the scan plane. Consequently, in a scanned image, the central part of the opposing pages, in an area which will be referred to herein as a "folding area," becomes darker than comparably formatted other parts in the image. FIG. 1 illustrates an example of the folding area 110.

The folding area 110 is a substantial distortion in the resulting image and it is therefore desirable to remove the folding area 110. Typically, to remove the folding area 110, a parameter is extracted by a histogram analysis of the input image data, and compensation of the distorted image data is performed based on the extracted parameter.

In conventional compensation, the histogram of the image data is analyzed to obtain the locations of sections where the pixel value of a foreground part and a pixel value of a background part are of a predetermined brightness, and then compensation is performed section-by-section in accordance with the brightness of the section being compensated. Since this compensation requires that the foreground part and the background part of the input image are consistently presented in the same colors, respectively, that is, the foreground part is always in one color and the background part is always in another color, such as when the input image is composed of dark characters on a light background, application of this compensation technique is limited. Also, if a book contains a picture, it is impossible by the traditional methods to distinguish a background value from a foreground value by the histogram analysis. Consequently, it is difficult to remove the folding area 110 through traditional distortion compensation of an image.

Document US 6175660-B1 discloses an elimination of the brightness difference in the folding area of a scanned book, where the correction factor is determined by taking image rows of marginal areas determined by a fixed distance from the borders of the scanned book.

Accordingly, embodiments of the present invention aim to provide an image forming apparatus and an image forming method to compensate an image for distortion generated through varying distances between a scan plane of an image forming apparatus and an object to be copied.

Additional aspects and utilities of the present invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:

FIG. 1 illustrates an example of a folding area by a copy of a book-bound document;
FIG. 2 is a block diagram illustrating a configuration of an image forming apparatus according to an embodiment of the present invention;
FIGS. 3A and 3B illustrate a generating order of a profile information according to an embodiment of the present invention;
FIG. 4 is a graph illustrating the profile information generated according to an embodiment of the present invention;
FIG. 5 illustrates a coordinate for correcting an image data according to an embodiment of the present invention;
FIG. 6 illustrates an image after correction of the image data according to an embodiment of the present invention; and
FIG. 7 is a flow chart illustrating an image form method according to an embodiment of the present invention.

Reference will now be made in detail to the embodiments of the present invention, examples of which are illustrated in the accompanying drawings, wherein like reference numerals refer to like elements throughout. The embodiments are described below so as to explain the present invention by referring to the figures.

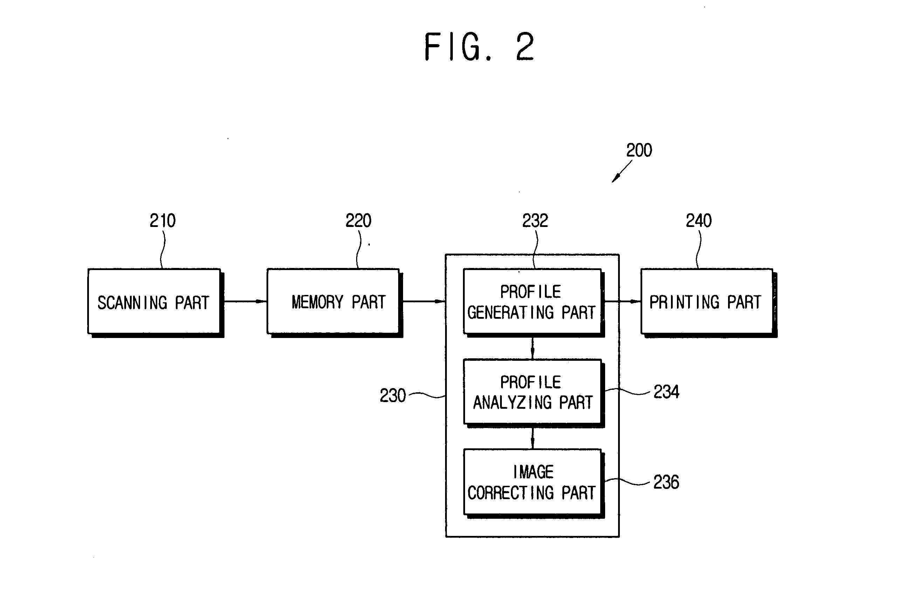

An image forming apparatus 200 according to an embodiment of the present invention may be embodied as a scanner, a duplicator, a multi function apparatus, etc. As illustrated in FIG. 2, the image forming apparatus 200 comprises a scanning part 210, a memory part 220, an image processing part 230 and a printing part 240. It is to be understood that the functional components illustrated in FIG. 2 are in an exemplary configuration that facilitates description of various functional features of the present invention. Other configurations that combine the functions to be described into certain components or that distribute the functions to be described among several other components are possible without deviating from the intended spirit and scope of the present invention.

The scanning part 210 scans an object to be copied, and generates image data in the form of, for example, an array of pixels. For purposes of explanation and not limitation, it will be assumed that the object to be copied in the present embodiment is a book, but the copying of other objects may benefit from embodiments of the present invention, as will be readily recognized by the skilled artisan upon review of this disclosure. To copy each page, the book is laid opened and face-down against a scan plane (not shown) with opposing pages being unfolded. Due to the manner in which books are generally bound, a central part of the opposing pages is removed from the scan plane by a variable distance. FIG. 1 illustrates an example of an input image 100 generated by the scanning part 210. The input image 100 comprises a page image 120 corresponding to an image of each page, and a folding area 110, appearing as a dark region between opposite page images 120a and 120b. Similar distortion causing regions of the image to lack sufficient contrast to discern foreground from background may be caused by other imaging problems, and the present invention may be applied to compensate such other problems as well. Further, the present invention is not limited to the implementation details of the scanning part 210, which may be any device capable of producing image data of an object placed on its scan plane.

The memory part 220 stores the image data of the input image 100 generated by the scanning part 210. As illustrated in FIG. 2, the memory part 220 is connected between the scanning part 210 and the image processing part 230 so that the image processing part 230 can process the image data stored in the memory part 220. Alternatively, only image data produced by a pre-scanning process, which refers to a lower resolution scan for generating a preview image, may be stored in the memory part 220, and the profile information yet to be discussed can be generated from the image data held in the memory part 220 of the pre-scanned object. The image data of the input image 100 that is to be actually processed by the image processing part 230 may then be compensated concurrently with the full resolution scanning operation. The present invention is not limited to the implementation details of the memory part 220, which may be any device capable of retaining image data.

The image processing part 230 detects the folding area 110 in the image data of the input image 100 supplied from the memory part 220, and corrects the detected folding area 110 to output a corrected image. The image processing part 230 may remove the folding area 110 from the input image 100 to generate a single corrected image that includes both of the page images 120a and 120b. Alternatively, the image processing part 230 may divide the input image 100 about the folding area 110, and generate a first corrected image and a second corrected image respectively corresponding to the opposite page images 120a and 120b. The folding area 110 is a region in a pixel row which has a rapid brightness variation in comparison to a vicinal pixel region in the same row. As such, the present invention may be used where such a distorted region is defined in an image, regardless of the source and location of the distorted region. Further, the image processing part may be implemented in hardware, software or a combination of both. For example, the image processing part 230 may be embodied as a processor executing processing instructions that carry out various features of the present invention, such as those described in the exemplary embodiments below. Additionally, the image processing part 230 may be implemented as a separate system completely removed from the scanning part 210 and printing part 240 in processing applications that can be performed offline.

The printing part 240 formats the corrected image data generated by the image processing part 230 into a human recognizable form. For example, the printing part 240 may form the corrected image on a record media, such as paper, etc. The printing part 240 may print the corrected image on a single paper, or print the first corrected image and the second corrected image on separate papers. The printing part 240 may perform an ink jet printing, a laser printing or other various printing configurations. Alternatively, the printing part 240 may form the corrected image on a display device, such as a computer monitor. The present invention is not limited to a particular implementation of printing part 240 and many variations may be used without departing from the intended spirit and scope of the present invention.

Hereinafter, a configuration of the image processing part 230 according to the present embodiment will be described in detail.

To efficiently compensate image distortion caused in the folding area 110 by insufficient contact with the scan plane, the image processing part 230 includes a profile generating part 232, a profile analyzing part 234 and an image correcting part 236. The exemplary configuration illustrated in FIG. 2 depicts functional compartmentalization that facilitates the description of the image processing part 230 in the context of the illustrated embodiment. It is to be understood, however, that the present invention is not limited to such configuration.

The profile generating part 232 generates profile information on the basis that each page of a book has a marginal area of a predetermined size in upper, lower, right and left sides thereof. The profile generating part 232 utilizes pixel values of an upper marginal area and pixel values of a lower marginal area to generate a profile of the page with respect to brightness. The marginal area is assumed to be primarily composed of pixels that have the same brightness value as the background of the rest of the image, with the exception of the portions of the marginal area in the folding area 110.

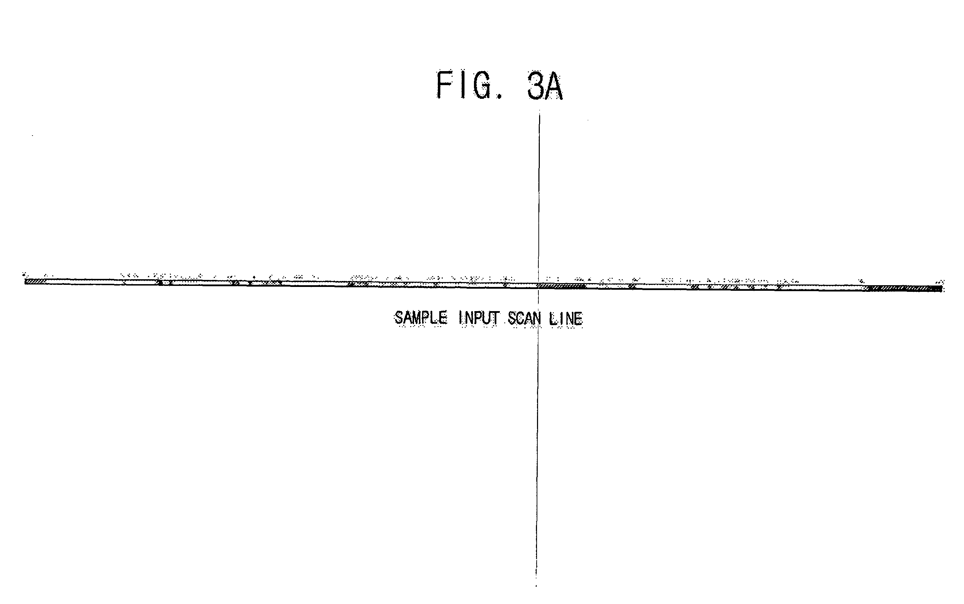

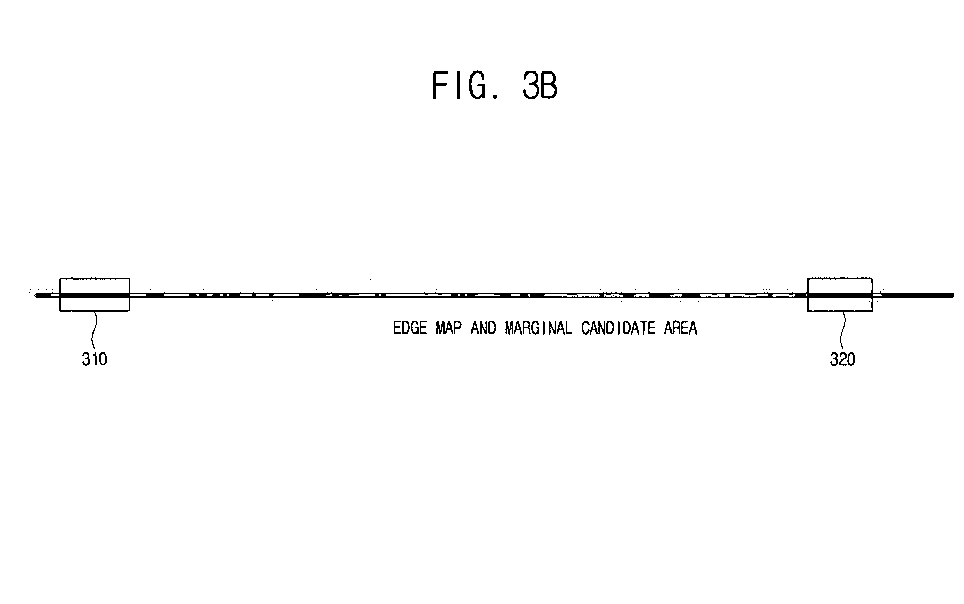

At first, a book to be copied is put on the scanning part 210. When a scan process is initiated, such as when a scan button is pushed, scanning is performed in scan lines from upper to lower ends of the image, as illustrated in the example of FIG. 1, and in image rows from right to left in the scanning direction as illustrated in the example in FIG. 1. The scanned image data may be stored in the memory part 220. Also, if the book to be copied is put on the scanning part 210 to be pre-scanned, a pre-scanning is performed from right to left as illustrated in FIG. 1, and data with respect to each scan line is generated and stored in the memory part 220. An example of an input scan line is illustrated in FIG. 3A. Considering pixel values of a specific scan line as illustrated in FIG. 3A, a corresponding edge map as illustrated in FIG. 3B is generated by the profile generating part 232. Here, uniform areas positioned on opposite sides of the edge map, as illustrated in FIG. 3B, are respectively designated to be marginal candidate areas 310 and 320.

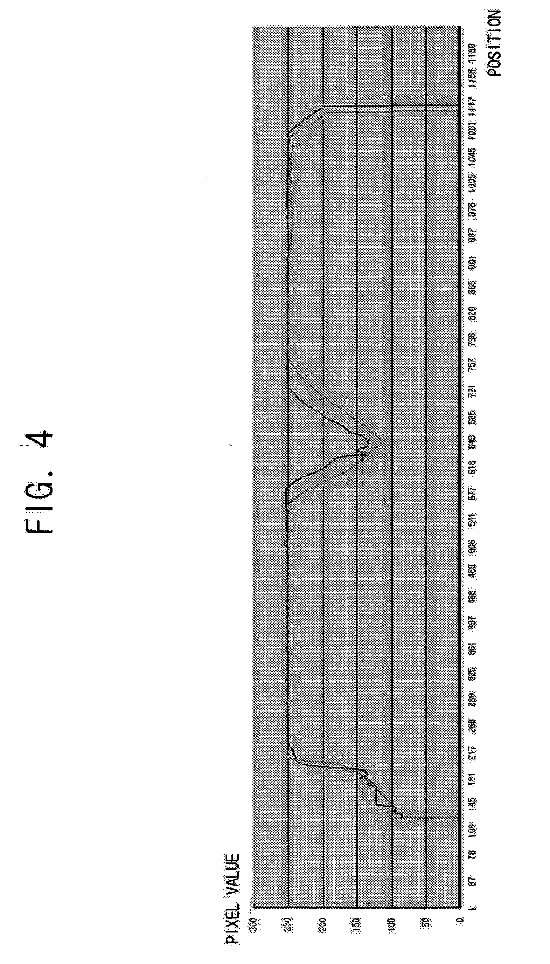

Then, a profile is formed, such as from pixel brightness values, from each image row having a maximum pixel value in the two candidate areas. That is, an upper profile may be obtained from an image row having a maximum pixel area in an upper candidate area, and a lower profile may be obtained from an image row having a maximum pixel value in a lower candidate area. FIG. 4 illustrates a graph of an exemplary upper profile and a lower profile generated according to the present embodiment. The graph plotted from left to right illustrated in FIG. 4 represents the pixel values of the image data in the upper and lower marginal areas, respectively, from left to right, with respect to the image illustrated in FIG. 1.

Referring to FIG. 4, one of the lines in the graph depicts values of the upper profile and the other line depicts values of the lower profile. The central area of the graph corresponds to the folding area 110 of the input image 100, and, as is readily observed, a pixel value in the folding area 110 is reduced to approximately half that of the marginal area. Accordingly, characteristics of the folding area 110 can be determined from the data obtained from the upper candidate area and the lower candidate area.

The profile analyzing part 234 analyzes the profile information obtained by the profile generating part 232 and determines a background value of the image data stored in the memory part 220, and also determines whether to perform an image correction. Also, if the profile information is generated by a pre-scanning operation, the profile analyzing part 234 determines a background value for an image that will be scanned at full resolution, and determines whether to perform an image correction.

In certain embodiments of the present invention, a histogram analysis of the profile obtained in the profile generating part 232 is performed. Taking a histogram for the profile of the $n^{th}$ image row in the marginal areas as H($n$), where the occurrence of each pixel value is counted into a corresponding histogram bin $k$, the pixel value corresponding to bin $k$ which is maximal in H($n$-1)+H($n$)+H($n$+1) may be selected as a first background value (*Background_*1). In other embodiments, the pixel value corresponding to bin $k$ which is maximal in H($n$) may be regarded as the first background value. However, adding profiles of different image rows in the candidate areas together may minimize the effects of noise on the analysis.

The first background value may serve as a reference value to determine if a region of the image is to be compensated. For example, if it is determined from the histogram analysis that the first background value is 240, such is consistent with the example in the graph of FIG. 4, any scan line corresponding to a value in the profile less than 240 would require image compensation. Certain embodiments of the present invention determine from the computed first background value and the profile which scan lines require compensation, while other embodiments may make the determination during the image correcting processes, as will be described in context with the image correcting part 236 below.

The image correcting part 236 performs a correction by using the profile and the first background value which are calculated in the previous stage.

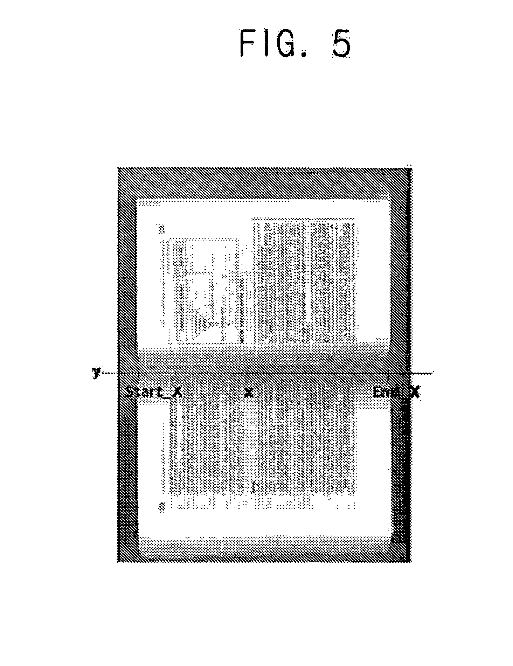

Referring now to FIG. 5, a pixel at coordinate (x, y), may be characterized by its red pixel value R, its green pixel value G and its blue pixel value B. In certain embodiments of the present invention, the RGB data at coordinate (*x, y*) are converted into a brightness value Y and chrominance values (Cb, Cr). The correction may then be performed only to the brightness value Y, and the chrominance values (Cb, Cr) are stored to be reapplied after distortion compensation.

Then, a second background value (*Background_*2) of the coordinate (*x, y*) is calculated by, for example, the following Equation 1:

$$Background\_2 = (BPV(y) - TPV(y)) \frac{x - Start\_x}{End\_x - Start\_x} + TPV(y).$$

Equation (1)

Here, *TPV* refers to an upper profile value, and *BPV* refers to a lower profile value. If a brightness value at *Start_x* in scan line *y* is *TPV*(*y*) and a brightness value at *End_x* in scan line *y* is *BPV*(*y*), then the second background value at position *x* in scan line *y* can be calculated by interpolation, as exemplified in Equation 1 above.

In certain embodiments of the present invention, the brightness value *BPV*(*y*) and/or *TPV*(*y*) is evaluated against the background value determined by the profile analyzing part, and, if *BPV(y)* of *TPV(y)* is less than the background value, the pixels in the scan line along y are compensated, such as by the process described below.

In the folding area 110 of the input image 100, where the brightness value *BPV(y)* and *TPV(y)* are less than the background value, the corrected pixel value may be calculated by, for example, Equation 2 below to correct the image data.

$$Ycorrected(x,y) = \frac{Background\_1 - min\_1}{Background\_2 - min\_2}(Yoriginal(x,y) - min\_2) + min\_1 \quad .$$

Equation (2)

Here, *Ycorrected (x, y)* refers to corrected brightness value at the coordinate (*x, y*), and *Yoriginal (x, y)* refers to image data at the coordinate (*x, y*) before correction. Also, *min_*1 and *min_*2 are variable offset values that can be determined by any suitable means on a per-application basis. Any foreground image data, such as a character at the coordinate (*x, y*), is assumed to be distorted to the same degree as the background, and distortion compensation in accordance with the present invention will increase the contrast between the background and the foreground. If the experimental offset values, *min_*1 and *min_*2 are 0, the following expression is derived.

*Ycorrected* (*x, y*): *Yoriginal* (*x, y*) = *Background_*1: *Background_*2

For example, if the first background value is 250, the second background value is 170 and the image data before correction is 100, the corrected image brightness value would be 147.

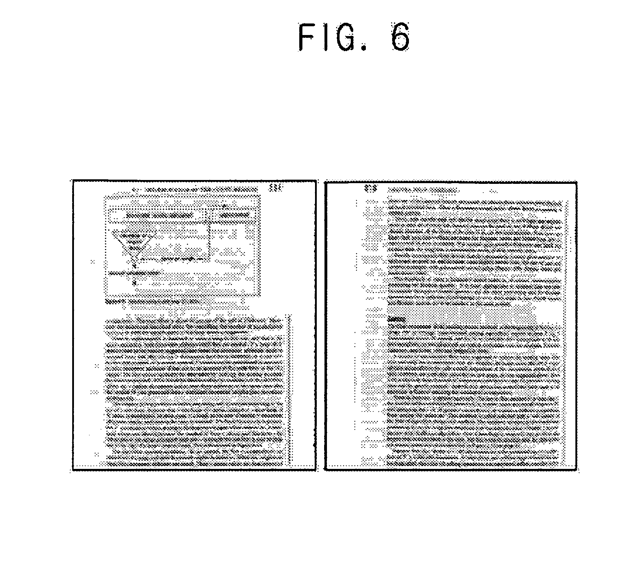

Lastly, corrected red pixel value R, green pixel value G and blue pixel value B are calculated by using *Ycorrected (x, y)* and the chrominance information (Cb, Cr) of the original image. An exemplary corrected image is illustrated in FIG. 6.

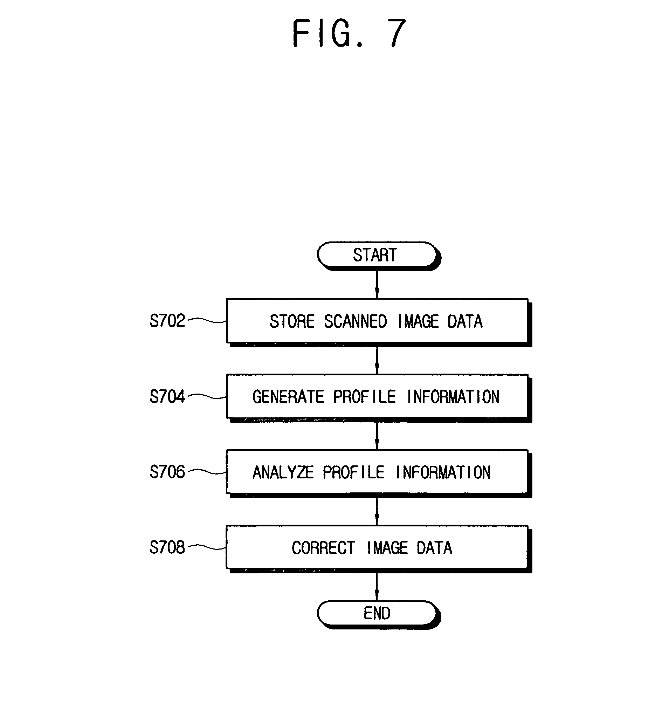

FIG. 7 is a flowchart illustrating an image forming method of an embodiment of the present invention.

If a book to be copied is put on the scanning part 210 and the scan is initiated, a scanned image is stored in the memory part 220 (operation S702).

Profile information is generated using pixel values in a marginal area of the image stored in the memory part 220 (operation S704). That is, pixel values in a specific scan line of the image data are converted into an edge map, and uniform areas positioned on opposite sides of the edge map are respectively designated as candidate areas. Then, the profile information respectively contains profile values from an image row having a maximum pixel value in the two candidate areas. That is, an upper profile is obtained from an image row having a maximum pixel area in an upper candidate area, and a lower profile is obtained from an image row having a maximum pixel value in a lower candidate area.

The profile information is analyzed to determine a first background value of the image data (operation S706). That is, the profile analyzing part 234 analyzes the profile obtained by the profile generating part 232 and determines a background value of the image stored in the memory part 220, and determines whether and where to perform the image correction, such as described above. Also, if the profile information is obtained in a pre-scanning operation, a first background value of the pre-scanned image is determined from the low resolution pre-scanned image and presumed for the full resolution scan, and it is determined whether to perform an image correction on the full resolution image.

Then, a correction of the image data is performed (operation S708). At first, red pixel value R, green pixel value G and blue pixel value B of a pixel at coordinate (*x, y*) are converted into a brightness value Y and chrominance values (Cb, Cr), and the correction is performed by using only the brightness value Y. Then, a second background value (*Background_*2) at the coordinate (*x, y*) is calculated, and the folding area 110 of the input image 100 is corrected. Lastly, corrected red pixel value R, green pixel value G and blue pixel value B are calculated from *Ycorrected (x, y)* and the chrominance information (Cb, Cr) of the original image.

As described above, embodiments of the present invention provide an image forming apparatus and an image forming method to efficiently compensate image distortion due to a varying distance of the object being scanned from a scan plane.

Also, embodiments of the present invention provide an image forming apparatus and an image forming method to detect a folding area of a book to remove a distorted specific area of an input image.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

**EP 1 914 979 B1**

**Claims**

1. An image forming method, comprising:

generating (S704) a profile from pixel values of a marginal area of an image;
determining a background value of the image data by analyzing (S706) the profile; and
performing a correction (S708) on pixels of the image to increase the value of background pixels of the image having the value less than the background value, **characterised in that** the generating of the profile includes:

obtaining an upper profile in an upper marginal area and a lower profile in a lower marginal area wherein pixel values of a specific scan line in a main scanning direction of said image data are converted into an edge map, the specific scan line is selected such that the converted edge map includes at least two uniform areas, wherein uniform areas positioned on opposite sides of the edge map are designated as said marginal areas, and wherein the designation of said marginal areas assumes them to be primarily composed of pixels that have the same brightness value as the background of the rest of the image, with the exception of portions of the marginal areas in the folding area, wherein each profile is obtained from an image row having a maximum pixel value in each marginal area.

2. The image forming method according to claim 1, wherein the performing of the correction includes:

correcting a brightness value of the image pixel.

3. The image forming method according to claim 2, wherein the performing of the correction further comprises:

converting a red pixel value, a green pixel value and a blue pixel value of the image data into the brightness value and a chrominance value.

4. An image forming apparatus, comprising:

a profile generating part (232) which uses a pixel value of a marginal area of an image to generate a profile;
a profile analyzing (234) part which analyzes the profile to determine a background value of the image; and
an image correcting part (236) which corrects a brightness value of the image so as to increase a value of background pixels of the image having the value less than the background value, **characterised in that** the profile generating part obtains an upper profile in an upper marginal area and a lower profile in a lower marginal area wherein pixel values of a specific scan line in a main scanning direction of said image data are converted into an edge map, the specific scan line is selected such that the converted edge map includes at least two uniform areas, wherein uniform areas positioned on opposite sides of the edge map, are designated as said marginal areas wherein the designation of said marginal areas assumes them to be primarily composed of pixels that have the same brightness value as the background of the rest of the image, with the exception of portions of the marginal areas in the folding area and wherein each profile is obtained from an image row having a maximum pixel value in each marginal area.

5. The image forming apparatus according to claim 4, further comprising:

a scanning part (210) to obtain the image as a plurality of image rows obtained through a plurality of scan lines, the scanning part to operate in one of a low resolution pre-scanning mode and a full resolution scanning mode.

6. The image forming apparatus according to claim 5, wherein the profile is generated by the profile generating part from the image as obtained in the pre-scanning mode of the scanning part.

7. The image forming apparatus according to claim 6, wherein the brightness value is corrected on the image obtained in the scanning mode of the scanning part.

8. The image forming apparatus according to claim 7, wherein the brightness value is corrected on each scan line as the image is obtained in the scanning mode of the scanning part.

**EP 1 914 979 B1**

**Patentansprüche**

1. Bilderzeugungsverfahren, das Folgendes umfasst:

   Erzeugen (S704) eines Profils von Pixelwerten eines Randbereichs eines Bildes;
   Bestimmen eines Hintergrundwertes der Bilddaten durch Analysieren (S706) des Profils; und
   Ausführen einer Korrektur (S708) an den Pixeln des Bildes, um den Wert der Hintergrundpixel des Bildes, die
   den Wert aufweisen, der kleiner als der Hintergrundwert ist, zu erhöhen, **dadurch gekennzeichnet, dass** das
   Erzeugen des Profils enthält:

      Erhalten eines oberen Profils in einem oberen Randbereich und eines unteren Profils in einem unteren
      Randbereich, wobei die Pixelwerte einer bestimmten Abtastzeile in einer Hauptabtastrichtung der Bilddaten
      in eine Randkarte umgesetzt werden, wobei die bestimmte Abtastzeile so ausgewählt wird, dass die umgesetzte Randkarte mindestens zwei einheitliche Bereiche enthält, wobei einheitliche Bereiche, die an
      gegenüberliegenden Seiten der Randkarte positioniert sind, als Randbereiche bezeichnet werden, und
      wobei die Bezeichnung der Randbereiche annimmt, dass sie mit der Ausnahme von Abschnitten der Randbereiche in dem Faltbereich hauptsächlich aus Pixeln bestehen, die denselben Helligkeitswert wie der
      Hintergrund des Restes des Bildes aufweisen, wobei jedes Profil aus einer Bildzeile erhalten wird, die einen
      maximalen Pixelwert in jedem Randbereich besitzt.

2. Bilderzeugungsverfahren nach Anspruch 1, wobei das Ausführen der Korrektur enthält:

   Korrigieren eines Helligkeitswertes des Bildpixels.

3. Bilderzeugungsverfahren nach Anspruch 2, wobei das Ausführen der Korrektur ferner umfasst:

   Umsetzen eines roten Pixelwertes, eines grünen Pixelwertes und eines blauen Pixelwertes der Bilddaten in
   den Helligkeitswert und einen Chrominanzwert.

4. Bilderzeugungsvorrichtung, die Folgendes umfasst:

   einen Profilerzeugungsteil (232), der einen Pixelwert eines Randbereichs eines Bildes verwendet, um ein Profil
   zu erzeugen;
   einen Profilanalyseteil (234), der das Profil analysiert, um einen Hintergrundwert des Bildes zu bestimmen; und
   einen Bildkorrekturteil (236), der einen Helligkeitswert des Bildes korrigiert, um einen Wert der Hintergrundpixel
   des Bildes, die den Wert aufweisen, der kleiner als der Hintergrundwert ist, zu erhöhen, **dadurch gekennzeichnet, dass** der Profilerzeugungsteil ein oberes Profil in einem oberen Randbereich und ein unteres Profil in
   einem unteren Randbereich erhält, wobei die Pixelwerte einer bestimmten Abtastzeile in einer Hauptabtastrichtung der Bilddaten in eine Randkarte umgesetzt werden, wobei die bestimmte Abtastzeile so ausgewählt
   wird, dass die umgesetzte Randkarte mindestens zwei einheitliche Bereiche enthält, wobei einheitliche Bereiche,
   die an gegenüberliegenden Seiten der Randkarte positioniert sind, als die Randbereiche bezeichnet werden,
   wobei die Bezeichnung der Randbereiche annimmt, dass sie mit der Ausnahme von Abschnitten der Randbereiche in dem Faltbereich hauptsächlich aus Pixeln bestehen, die denselben Helligkeitswert wie der Hintergrund
   des Restes des Bildes aufweisen, und wobei jedes Profil aus einer Bildzeile erhalten wird, die einem maximalen
   Pixelwert in jedem Randbereich besitzt.

5. Bilderzeugungsvorrichtung nach Anspruch 4, die ferner Folgendes umfasst:

   einen Abtastteil (210), um das Bild als mehrere Bildzeilen zu erhalten, die durch mehrere Abtastzeilen erhalten
   werden, wobei der Abtastteil in einem Vorabtastmodus mit einer geringen Auflösung und einem Abtastmodus
   mit einer hohen Auflösung arbeitet.

6. Bilderzeugungsvorrichtung nach Anspruch 5, wobei das Profil durch den Profilerzeugungsteil aus dem Bild, wie es
   in dem Vorabtastmodus des Abtastteils erhalten wurde, erzeugt wird.

7. Bilderzeugungsvorrichtung nach Anspruch 6, wobei der Helligkeitswert an dem Bild korrigiert wird, das in dem
   Abtastmodus des Abtastteils erhalten wurde.

8.  Bilderzeugungsvorrichtung nach Anspruch 7, wobei der Helligkeitswert auf jeder Abtastzeile korrigiert wird, während das Bild in dem Abtastmodus des Abtastteils erhalten wird.

**Revendications**

1.  Procédé de formation d'image, comprenant :

    la génération (S704) d'un profil à partir de valeurs de pixels d'une zone marginale d'une image ;
    la détermination d'une valeur d'arrière-plan des données d'image en analysant (S706) le profil ; et
    l'exécution d'une correction (S708) sur des pixels de l'image afin d'augmenter la valeur de pixels d'arrière-plan de l'image ayant une valeur inférieure à la valeur d'arrière-plan, **caractérisé en ce que** la génération du profil comporte :

    l'obtention d'un profil supérieur dans une zone marginale supérieure et d'un profil inférieur dans une zone marginale inférieure, dans lequel des valeurs de pixels d'une ligne de balayage particulière dans une direction de balayage principale desdites données d'image sont converties en une carte de bord, la ligne de balayage spécifique est sélectionnée de manière à ce que la carte de bord convertie comporte au moins deux zones uniformes, dans lequel des zones uniformes positionnées sur des côtés opposés de la carte de bord sont désignées en tant que lesdites zones marginales, et dans lequel la désignation desdites zones marginales repose sur l'hypothèse qu'elles sont principalement composées de pixels ayant la même valeur de luminosité que l'arrière-plan du reste de l'image, à l'exception de parties des zones marginales se trouvant dans la zone de repliement, dans lequel chaque profil est obtenu à partir d'une rangée de l'image ayant une valeur de pixel maximale dans chaque zone marginale.

2.  Procédé de formation d'image selon la revendication 1, dans lequel l'exécution de la correction comporte :

    la correction d'une valeur de luminosité du pixel d'image.

3.  Procédé de formation d'image selon la revendication 2, dans lequel l'exécution de la correction comprend en outré :

    la conversion d'une valeur de pixel rouge, d'une valeur de pixel verte et d'une valeur de pixel bleue des données d'image en la valeur de luminosité et en une valeur de chrominance.

4.  Appareil de formation d'image, comprenant :

    une partie génératrice de profil (232) qui utilise une valeur de pixel d'une zone marginale d'une image pour générer un profil ;
    une partie d'analyse de profil (234) qui analyse le profil pour déterminer une valeur d'arrière-plan de l'image ; et
    une partie de correction d'image (236) qui corrige une valeur de luminosité de l'image afin d'augmenter une valeur de pixel d'arrière-plan de l'image ayant une valeur inférieure à la valeur d'arrière-plan, **caractérisé en ce que** la partie génératrice de profil obtient un profil supérieur dans une zone marginale supérieure et un profil inférieur dans une zone marginale inférieure, dans lequel des valeurs de pixels d'une ligne de balayage particulière dans une direction de balayage principale desdites données d'image sont converties en une carte de bord, la ligne de balayage particulière est sélectionnée de manière à ce que la carte de bord convertie comporte au moins deux zones uniformes, dans lequel des zones uniformes positionnées sur des côtés opposés de la carte de bord sont désignées en tant que lesdites zones marginales, dans lequel la désignation desdites zones marginales repose sur l'hypothèse qu'elles sont principalement composées de pixels ayant la même valeur de luminosité que l'arrière-plan du reste de l'image, à l'exception de parties des zones marginales se trouvant dans la zone de repliement et dans lequel chaque profil est obtenu à partir d'une rangée de l'image ayant une valeur de pixel maximale dans chaque zone marginale.

5.  Appareil de formation d'image selon la revendication 4, comprenant en outré :

    une partie de balayage (210) destinée à obtenir l'image sous la forme d'une pluralité de rangées de l'image obtenues au moyen d'une pluralité de lignes de balayage, la partie de balayage étant destinée à fonctionner dans l'un d'un mode de pré-balayage à basse résolution et d'un mode de balayage à résolution maximale.

**6.** Appareil de formation d'image selon la revendication 5, dans lequel le profil est généré par la partie génératrice de profil à partir de l'image telle qu'elle est obtenue dans le mode de pré-balayage de la partie de balayage.

**7.** Appareil de formation d'image selon la revendication 6, dans lequel la valeur de luminosité est corrigée sur l'image obtenue dans le mode de balayage de la partie de balayage.

**8.** Appareil de formation d'image selon la revendication 7, dans lequel la valeur de luminosité est corrigée sur chaque ligne de balayage lorsque l'image est obtenue dans le mode de balayage de la partie de balayage.

# FIG. 1

SCANNING DIRECTION →

110

100

SCAN LINE DIRECTION ↓

120a

120b

120

# FIG. 2

EP 1 914 979 B1

# FIG. 3A

SAMPLE INPUT SCAN LINE

# FIG. 3B

EDGE MAP AND MARGINAL CANDIDATE AREA

310

320

EP 1 914 979 B1

FIG. 4

# FIG. 5

## FIG. 6

# FIG. 7

```
                    ( START )
                        │
                        ▼
S702 ──┐    ┌──────────────────────────────┐
       └────│   STORE SCANNED IMAGE DATA    │
            └──────────────────────────────┘
                        │
                        ▼
S704 ──┐    ┌──────────────────────────────┐
       └────│  GENERATE PROFILE INFORMATION │
            └──────────────────────────────┘
                        │
                        ▼
S706 ──┐    ┌──────────────────────────────┐
       └────│  ANALYZE PROFILE INFORMATION  │
            └──────────────────────────────┘
                        │
                        ▼
S708 ──┐    ┌──────────────────────────────┐
       └────│       CORRECT IMAGE DATA      │
            └──────────────────────────────┘
                        │
                        ▼
                     ( END )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6175660 B1